# EUROPEAN PATENT SPECIFICATION

(11) **EP 3 394 526 B1**
(45) Date of publication and mention of the grant of the patent: **20.07.2022**
(21) Application number: 15825733.7
(22) Date of filing: 21.12.2015
(51) Int. Cl.: F25B 21/00

(54) **ELECTROCALORIC HEAT TRANSFER MODULAR STACK**
ELEKTROKALORISCHER WÄRMEÜBERTRAGUNGSMODULSTAPEL
PILE MODULAIRE DE TRANSFERT DE CHALEUR ÉLECTROCALORIQUE

(43) Date of publication of application: 31.10.2018
(60) Divisional application: 22165621.8
(73) Proprietor: Carrier Corporation, Palm Beach Gardens, FL 33418 (US)
(72) Inventor: WALKER, Craig R., South Glastonbury Connecticut 06073 (US); RHEAUME, Jonathan, West Hartford Connecticut 06119 (US); PERRY, Michael L., Glastonbury Connecticut 06033 (US); EASTMAN, Scott Alan, Glastonbury Connecticut 06033 (US); ANNAPRAGADA, Subramanyaravi, Shrewsbury Massachusetts 01545 (US); VERMA, Parmesh, South Windsor Connecticut 06074 (US); MANTESE, Joseph V., Ellington Connecticut 06029 (US)
(74) Representative: Dehns
(86) International application number: PCT/US2015/067189
(87) International publication number: WO 2017/111919

(56) References cited:
- WO-A1-2015/156794
- US-A1- 2010 175 392
- US-A1- 2013 067 935

## Description

### BACKGROUND

A wide variety of technologies exist for cooling applications, including but not limited to evaporative cooling, convective cooling, or solid state cooling such as electrothermic cooling. One of the most prevalent technologies in use for residential and commercial refrigeration and air conditioning is the vapor compression refrigerant heat transfer loop. These loops typically circulate a refrigerant having appropriate thermodynamic properties through a loop that comprises a compressor, a heat rejection heat exchanger (i.e., heat exchanger condenser), an expansion device and a heat absorption heat exchanger (i.e., heat exchanger evaporator). Vapor compression refrigerant loops effectively provide cooling and refrigeration in a variety of settings, and in some situations can be run in reverse as a heat pump. However, many of the refrigerants can present environmental hazards such as ozone depleting potential (ODP) or global warming potential (GWP), or can be toxic or flammable. Additionally, vapor compression refrigerant loops can be impractical or disadvantageous in environments lacking a ready source of power sufficient to drive the mechanical compressor in the refrigerant loop. For example, in an electric vehicle, the power demand of an air conditioning compressor can result in a significantly shortened vehicle battery life or driving range. Similarly, the weight and power requirements of the compressor can be problematic in various portable cooling applications.

Accordingly, there has been interest in developing cooling technologies as alternatives to vapor compression refrigerant loops. Various technologies have been proposed such as field-active heat or electric current-responsive heat transfer systems relying on materials such as electrocaloric materials, magnetocaloric materials, or thermoelectric materials. However, many proposals have been configured as bench-scale demonstrations with limited capabilities for scalability or mass production.

WO 2015/156794 A1 discloses a heat transfer system according to the preamble of claim 1, comprising a thin-film material and electrodes coupled to both sides of the thin-film material to form an electroded active thin-film material.

### BRIEF DESCRIPTION

In an aspect of the invention, there is provided a heat transfer system as recited in claim 1.

The first electrical bus element is electrically connected to at least one other electrical bus of another electrocaloric element in the stack at the same polarity as said first electrical bus, and the second electrical bus element is electrically connected to at least one other electrical bus of another electrocaloric element in the stack at the same polarity as said second electrical bus.

In any of the foregoing embodiments, the first or second electrical bus is electrically connected to an electrical bus of an adjacent electrocaloric element in the stack at the same polarity as said first or second electrical bus.

In any of the foregoing embodiments, the first and second electrical bus elements are each electrically connected to electrical bus elements of an adjacent electrocaloric element in the stack at the same polarities as said first and second electrical bus elements, respectively.

In any of the foregoing embodiments, the first and second electrical bus elements are each in an interlocking configuration to electrical bus elements of an adjacent electrocaloric element in the stack.

In any of the foregoing embodiments, the first electrical bus element is electrically connected to a live electrode and the second electrical bus element is electrically connected to a ground electrode.

In any of the foregoing embodiments, the first and second electrical bus elements are disposed along opposite edges of the electrocaloric element.

In any of the foregoing embodiments, the first electrode extends from the first electrical bus element along the first side of the electrocaloric film to a position physically separated from the second electrical bus element, and the second electrode extends from the second electrical bus element along the second side of the electrocaloric film to a position physically separated from the first electrical bus element.

In any of the foregoing embodiments, the first and second electrical bus elements are disposed along a common edge of the electrocaloric element.

In any of the foregoing embodiments, at least two adjacent electrocaloric elements that share an electrode are at least partially embedded between the electrocaloric films of the adjacent electrocaloric elements.

In any of the foregoing embodiments, the embedded electrode is a live electrode, and comprising ground electrodes adjacent to the fluid flow path.

In any of the foregoing embodiments, one or more spacer elements are disposed between electrocaloric elements.

In any of the foregoing embodiments, the one or more spacer elements extend axially along a direction of fluid flow along the fluid flow path.

In any of the foregoing embodiments, the one or more axially-extending spacer elements extend linearly along a direction of fluid flow along the fluid flow path.

In any of the foregoing embodiments, the one or more axially-extending spacer elements extend non-linearly along a direction of fluid flow along the fluid flow path.

In any of the foregoing embodiments, the one or more spacer elements are electrically non-conductive.

In any of the foregoing embodiments, the electrocaloric element thickness is 1 µm to 1000 µm.

In any of the foregoing embodiments, the physical separation between electrocaloric elements in adjacent modules is from 1 µm to 200 mm.

In any of the foregoing embodiments, the plurality of modules further comprise an electrically non-conductive support member connected to the electrocaloric element.

In any of the foregoing embodiments, the support includes header spaces at opposing ends of the electrocaloric elements in fluid communication with the fluid flow path.

In any of the foregoing embodiments, the supports of the plurality of modules together form an enclosure within which the electrocaloric elements and the spacer elements are disposed.

In any of the foregoing embodiments, the electrocaloric film comprises an electrocaloric polymer.

In any of the foregoing embodiments, the electrocaloric polymer comprises polyvinylidene fluoride (PVDF) or a liquid crystal polymer (LCP).

In any of the foregoing embodiments, the electrocaloric film comprises an inorganic electrocaloric material.

In any of the foregoing embodiments, the first and second electrodes each comprise a metalized layer deposited on the electrocaloric film.

In some embodiments, a heat transfer system comprises an electrocaloric element formed by the method of any of the above embodiments, a first thermal flow path between the electrocaloric element and a heat sink, a second thermal flow path between the electrocaloric element and a heat source, and a controller configured to control electrical current to the conductive layers and to selectively direct transfer of heat energy from the electrocaloric element to the heat sink along the first thermal flow path or from the heat source to the electrocaloric element along the second thermal flow path.

In another aspect, a method of fabricating the heat transfer system of any of the foregoing embodiments comprises assembling repeating units of the modules in a stack configuration.

### BRIEF DESCRIPTION OF THE DRAWINGS

Subject matter of this disclosure is particularly pointed out and distinctly claimed in the claims at the conclusion of the specification. The foregoing and other features, and advantages of the present disclosure are apparent from the following detailed description taken in conjunction with the accompanying drawings in which:
FIG. 1 is a schematic depiction of a top view of an example embodiment of an electrocaloric heat transfer module;
FIG. 2 is a schematic depiction of a cross-section side view of an example embodiment of an electrocaloric heat transfer module;
FIG. 3A is a schematic depiction of an exploded perspective view of an electrode and electrocaloric film configuration;
FIG. 3B is a top view of a portion of the configuration of FIG. 4 with an electric bus element;
FIG. 4 is a schematic depiction of an example embodiment of a stack assembly of a number of electrocaloric heat transfer modules;
FIG. 5 is a schematic depiction of an alternate example embodiment of a stack assembly of a number of electrocaloric heat transfer modules and
FIG. 6 is a schematic depiction of an example embodiment of heat transfer system comprising an electrocaloric stack and other components.

### DETAILED DESCRIPTION

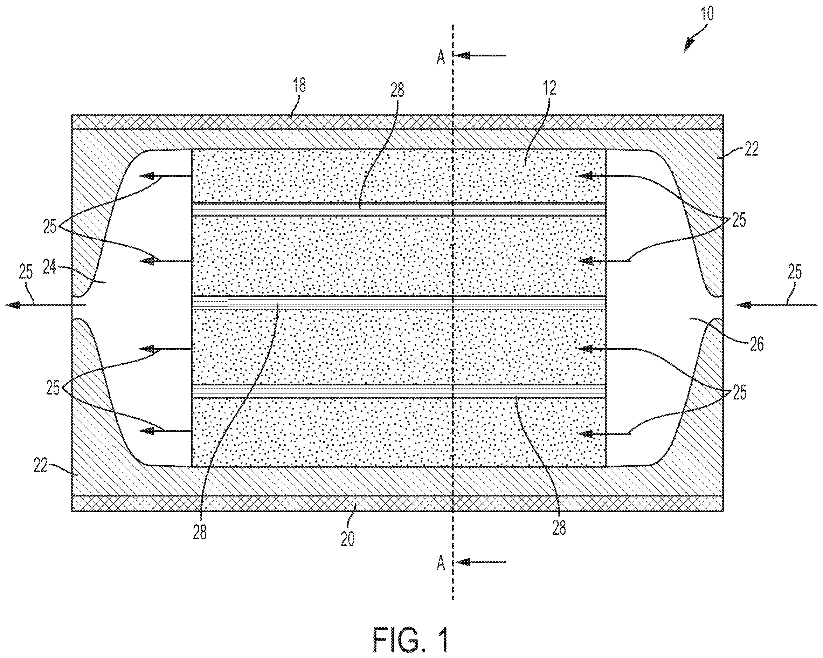

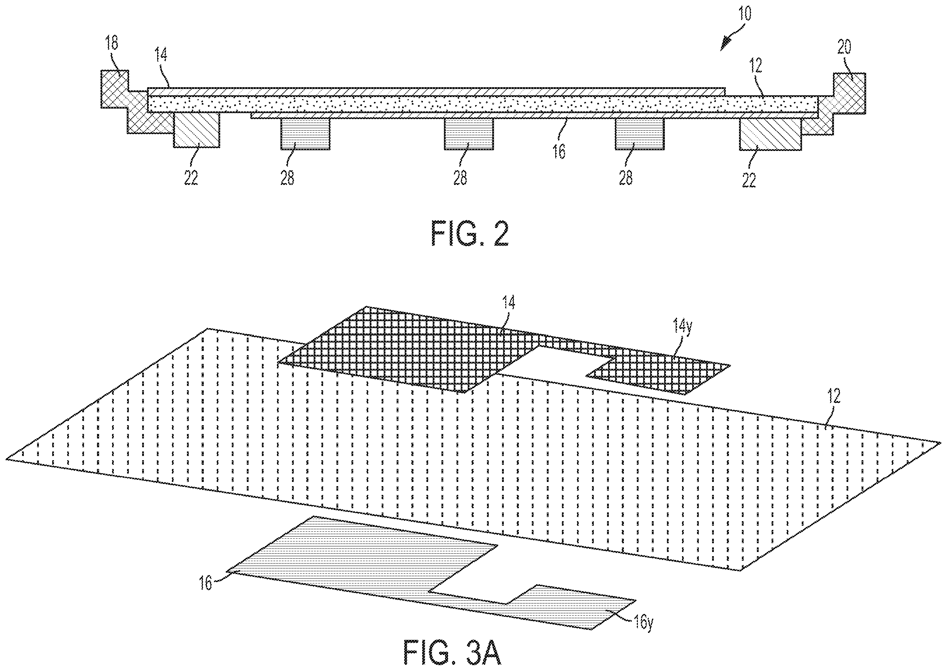

As mentioned above, a heat transfer system is disclosed that comprises a plurality of modules arranged in a stack. An example of an embodiment of a module is schematically depicted in FIGS 1 and 2. Although any directions described herein (e.g., "up", "down", "top", "bottom", "left", "right", "over", "under", etc.) are considered to be arbitrary and to not have any absolute meaning but only a meaning relative to other directions, FIG. 1 can be described as a "top" view of an example embodiment of a module and FIG. 2 can be described as a "side" cross-section view taken along the line A↔A shown in FIG. 1. As shown in FIGS. 1 and 2, a module 10 comprises an electrocaloric element comprises an electrocaloric film 12, a first electrode 14 on a first side of the film and a second electrode 16 on a second side of the film. It is noted that, for ease of illustration so that details of the electrocaloric film 12 and other components are not obscured, the electrodes 14, 16 are omitted from FIG. 1 and are only illustrated in FIG. 2.

The electrocaloric film 12 can comprise any of a number of electrocaloric materials. In some embodiments, electrocaloric film thickness can be in a range from having a lower limit of 0.1 µm, more specifically 0.5 µm, and even more specifically 1 µm. In some embodiments, the film thickness range can and having an upper limit of 1000 µm, more specifically 100 µm, and even more specifically 10 µm. It is understood that these upper and lower range limits can be independently combined to disclose a number of different possible ranges. Examples of electrocaloric materials for the electrocaloric film can include but are not limited to inorganic materials (e.g., ceramics), electrocaloric polymers, and polymer/ceramic composites. Examples of inorganics include but are not limited to PbTiO₃ ("PT"), Pb(Mg_{1/3}Nb_{2/3})O₃ ("PMN"), PMN-PT, LiTaO₃, barium strontium titanate (BST) or PZT (lead, zirconium, titanium, oxygen). Examples of electrocaloric polymers include, but are not limited to ferroelectric polymers, liquid crystal polymers, and liquid crystal elastomers.

Ferroelectric polymers are crystalline polymers, or polymers with a high degree of crystallinity, where the crystalline alignment of polymer chains into lamellae and/or spherulite structures can be modified by application of an electric field. Such characteristics can be provided by polar structures integrated into the polymer backbone or appended to the polymer backbone with a fixed orientation to the backbone. Examples of ferroelectric polymers include polyvinylidene fluoride (PVDF), polytriethylene fluoride, odd-numbered nylon, copolymers containing repeat units derived from vinylidene fluoride, and copolymers containing repeat units derived from triethylene fluoride. Polyvinylidene fluoride and copolymers containing repeat units derived from vinylidene fluoride have been widely studied for their ferroelectric and electrocaloric properties. Examples of vinylidene fluoride-containing copolymers include copolymers with methyl methacrylate, and copolymers with one or more halogenated co-monomers including but not limited to trifluoroethylene, tetrafluoroethylene, chlorotrifluoroethylene, trichloroethylene, vinylidene chloride, vinyl chloride, and other halogenated unsaturated monomers.

Liquid crystal polymers, or polymer liquid crystals comprise polymer molecules that include mesogenic groups. Mesogenic molecular structures are well-known, and are often described as rod-like or disk-like molecular structures having electron density orientations that produce a dipole moment in response to an external field such as an external electric field. Liquid crystal polymers typically comprise numerous mesogenic groups connected by non-mesogenic molecular structures. The non-mesogenic connecting structures and their connection, placement and spacing in the polymer molecule along with mesogenic structures are important in providing the fluid deformable response to the external field. Typically, the connecting structures provide stiffness low enough so that molecular realignment is induced by application of the external field, and high enough to provide the characteristics of a polymer when the external field is not applied.

In some exemplary embodiments, a liquid crystal polymer can have rod-like mesogenic structures in the polymer backbone separated by non-mesogenic spacer groups having flexibility to allow for re-ordering of the mesogenic groups in response to an external field. Such polymers are also known as main-chain liquid crystal polymers. In some exemplary embodiments, a liquid crystal polymer can have rod-like mesogenic structures attached as side groups attached to the polymer backbone. Such polymers are also known as side-chain liquid crystal polymers.

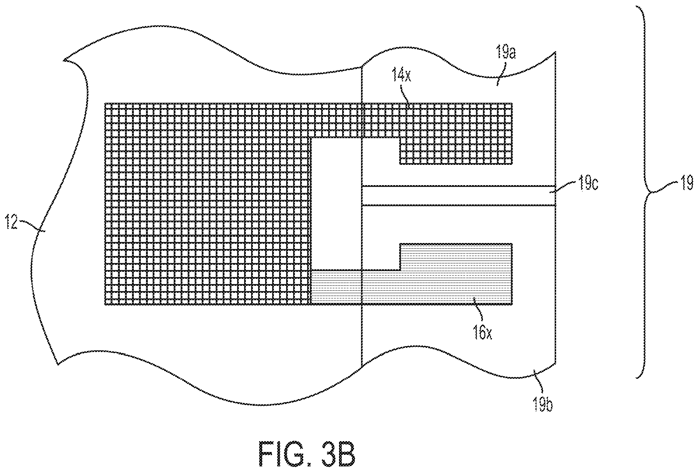

With continued reference to FIGS. 1 and 2, first electrode 14 is electrically connected to a first electrical bus element 18. Similarly, second electrode 16 is electrically connected to second electrical bus element 20. The electrodes can be any type of conductive material, including but not limited to metallized layers of a conductive metal such as aluminum or copper, or other conductive materials such as carbon (e.g., carbon nanotubes, graphene, or other conductive carbon). Noble metals can also be used, but are not required. Other conductive materials such as a doped semiconductor, ceramic, or polymer, or conductive polymers can also be used. In some embodiments, the electrical bus elements 18 and 20 of opposite polarity are disposed on opposite edges of the electrocaloric film 12 as shown in FIG. 2, which can in some embodiments provide a physical separation that can reduce the risk of short circuits. As also shown in FIG. 2, the electrodes 14 and 16 can extend from a position in contact with an electrical bus element on one edge of the film and extend across the film to a position that is not in contact with the electrical bus element of opposite polarity on the other edge of the film 12. In some embodiments, the electrical bus elements 18 and 20 can be disposed on the same side of the electrocaloric element as shown in FIGS. 3A and 3B. FIG. 3A is a schematic depiction of a perspective exploded view of an electrocaloric film 12 having a top electrode 14 and a bottom electrode 16. The top and bottom electrodes in FIGS. 3A and 3B have lead portions 14y and 16y for an electrical connection to an electrical bus element 19. The connection between the electrodes 14, 16 and the bus element 19 is depicted in a top view in FIG. 3B where only a portion of electrocaloric film 12 and the bus element 19 are shown. As shown in FIG. 3B, bus element has a first polarity portion 19a connected to the lead portion 14y of top electrode 14 and a second polarity portion 19b connected to the lead portion 16y of bottom electrode 16, and an electrically non-conductive portion 19c that electrically isolates the portions 19a and 19b of different polarities.

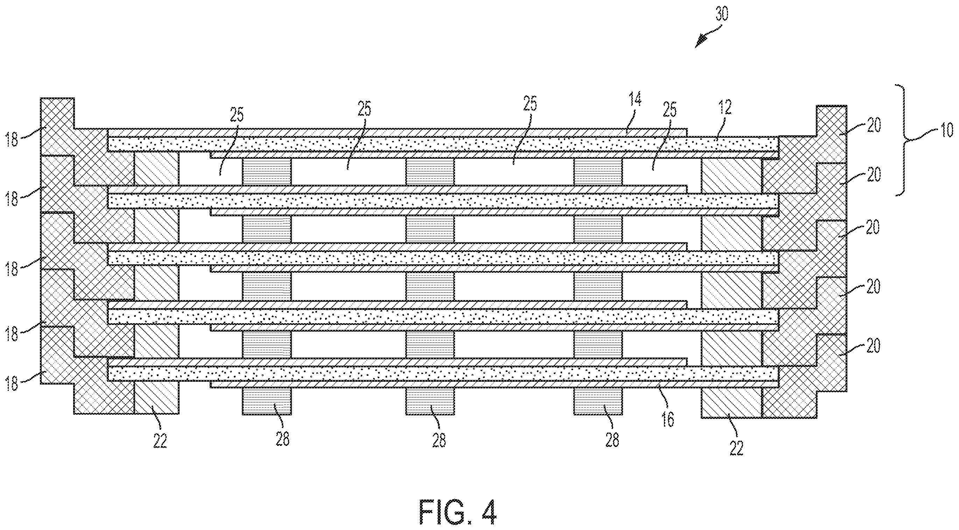

One or more support elements 22 can optionally be included for support and retention of the electrocaloric element. However, separate support elements are not required, as support and retention can also be provided by the bus elements as shown in FIG. 4 described below. As shown in FIG. 1, the support element(s) 22 can be configured to provide header spaces 24 and 26 for transport of working fluids to and from the electrocaloric element along fluid flow path 25. Although not required in all design configurations, in some embodiments, the support elements can be made from an electrically non-conductive material.

Spacer elements 28 can optionally be included to help maintain separation from adjacent electrocaloric elements for a fluid flow path for a working fluid (e.g., either a fluid to be heated or cooled directly such as air, or a heat transfer fluid such as a dielectric organic compound). Any configuration of spacer elements can be utilized, such as a set of discrete disk spacer elements. In some aspects, however, the spacer elements extend axially in a direction parallel to the direction of the fluid flow path 25. Such axial extension can be linear (i.e., in a straight line) as shown in FIG. 1, or can be non-linear (e.g., in a zig-zag or wavy pattern that extends generally in an axial direction. In some embodiments, the nonlinearity can promote good fluid mixing while the general extension in the axial direction can help avoid excessive back-pressure to the flowing fluid.

Turning now to FIG. 4 where like numbering is used as FIGS. 1 and 2, a number of modules 10 are shown assembled together in a stack 30. As can be seen in FIG. 3, the spacers promote maintaining a physical separation between adjacent electrocaloric elements to provide a fluid flow path 25 between the spacers and the adjacent electrocaloric elements. Although not required in all design configurations, in design configurations where the spacer elements are disposed adjacent to electrodes of opposite polarity as shown in FIG. 3, the spacer elements can be made from an electrically non-conductive material. In some embodiments, spacing between adjacent electrocaloric elements can be in a range from having a lower limit of 1 µm, more specifically 10 µm, and even more specifically 50 µm. In some embodiments, the separation spacing range can have an upper limit of 200 mm, more specifically 10 mm, even more specifically 2 mm. It is understood that these upper and lower range limits can be independently combined to disclose a number of different possible ranges.

According to the invention, adjacent electrical bus elements 18, 20 have an interlocking configuration as shown in FIG. 4. As used herein, interlocking means that adjacent elements have complementary contour of projections and recesses where a projection of one bus element projects is adjacent or projects into to a complementary recess of an adjacent bus element. Such an arrangement can facilitate assembly and promote structural integrity and electrical continuity of the assembled bus elements in the stack.

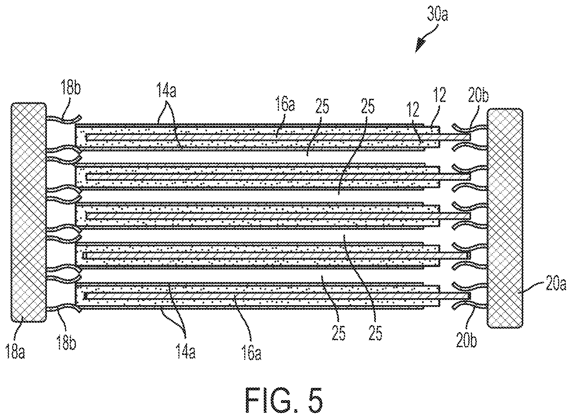

FIG. 4 depicts a stack with alternating electrocaloric elements and fluid flow passages; however, FIG. 4 represents only one example of a stack embodiment and is not limiting. An alternate embodiment is depicted in FIG. 5. With reference now to FIG. 5, a stack 30a is shown where bus elements 18b are connected to a bus bar 18a and bus elements 20b are connected to a bus bar 20a. As shown in FIG. 5 the electrodes 16a electrically connected to bus elements 20b are at least partially embedded between the electrocaloric films 12 of adjacent electrocaloric elements. In this embodiment, the electrode 16a serves as an electrode for two adjacent electrocaloric elements or, put another way, the two adjacent electrocaloric elements share a single electrode. The electrodes 14a of opposite polarity are disposed on the outside of the electrocaloric element 'sandwich' and are not shared. This configuration can provide technical benefits by protecting the embedded electrode 16a from potential short circuits. In some embodiments, the at least partially embedded electrode is a live electrode, and the electrode exposed to the fluid flow path 25 is a ground electrode. It should be noted that although FIG. 5 depicts a sandwich of two films surrounding the embedded electrode, sandwiches of more than two films with embedded electrodes of alternating polarities are also contemplated.

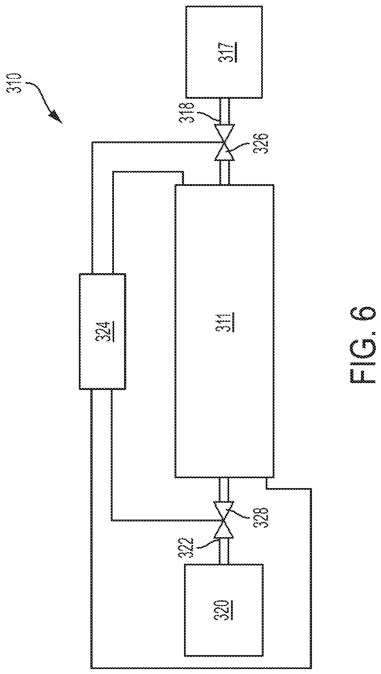

An example embodiment of a heat transfer system and its operation are further described with respect to FIG. 6. As shown in FIG. 6, a heat transfer system 310 comprises an electrocaloric stack 311 has one or more electrically conductive liquids in thermal communication with a heat sink 317 through a first thermal flow path 318, and in thermal communication with a heat source 320 through a second thermal flow path 322. A controller 324 is configured to control electrical current to through a power source (not shown) to selectively activate electrocaloric elements (not shown) in the stack 311. The controller 324 is also configured to open and close control valves 326 and 328 to selectively direct the electrically conductive liquid along the first and second flow paths 318 and 322.

In operation, the system 310 can be operated by the controller 324 applying an electric field as a voltage differential across the electrocaloric elements in the stack 311 to cause a decrease in entropy and a release of heat energy by the electrocaloric elements. The controller 324 opens the control valve 326 to transfer at least a portion of the released heat energy along flow path 318 to heat sink 317. This transfer of heat can occur after the temperature of the electrocaloric elements has risen to a threshold temperature. In some embodiments, heat transfer to the heat sink 317 is begun as soon as the temperature of the electrocaloric elements increases to be about equal to the temperature of the heat sink 317. After application of the electric field for a time to induce a desired release and transfer of heat energy from the electrocaloric elements to the heat sink 317, the electric field can be removed. Removal of the electric field causes an increase in entropy and a decrease in heat energy of the electrocaloric elements. This decrease in heat energy manifests as a reduction in temperature of the electrocaloric elements to a temperature below that of the heat source 320. The controller 324 closes control valve 326 to terminate flow along flow path 318, and opens control device 328 to transfer heat energy from the heat source 320 to the colder electrocaloric elements.

In some embodiments, for example where a heat transfer system is utilized to maintain a temperature in a conditioned space or thermal target, the electric field can be applied to the electrocaloric elements to increase its temperature until the temperature of the electrocaloric element reaches a first threshold. After the first temperature threshold, the controller 324 opens control valve 326 to transfer heat from the electrocaloric elements to the heat sink 317 until a second temperature threshold is reached. The electric field can continue to be applied during all or a portion of the time period between the first and second temperature thresholds, and is then removed to reduce the temperature of the electrocaloric elements until a third temperature threshold is reached. The controller 324 then closes control valve 326 to terminate heat flow transfer along heat flow path 318, and opens control valve 328 to transfer heat from the heat source 320 to the electrocaloric elements. The above steps can be optionally repeated until a target temperature of the conditioned space or thermal target (which can be either the heat source or the heat sink) is reached.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present invention is not to be seen as limited by the foregoing description, but is only limited by the scope of the appended claims.

## Claims

1. A heat transfer system, comprising a plurality of modules (10) arranged in a stack, each of the modules comprising
an electrocaloric element comprising an electrocaloric film (12), a first electrode (14) on a first side of the electrocaloric film (12), and a second electrode (16) on a second side of the electrocaloric film (12);
a fluid flow path (25) between two or more electrocaloric elements;
a first electrical bus element (18) in electrical contact with the first electrode (14); and
a second electrical bus element (20) in electrical contact with second electrode (16);
wherein the first electrical bus element (18) is electrically connected to at least one other electrical bus of another electrocaloric element in the stack at the same polarity as said first electrical bus (18), or the second electrical bus element (20) is electrically connected to at least one other electrical bus of another electrocaloric element in the stack at the same polarity as said second electrical bus (20);
**characterised in that**
the first or second electrical bus element (18, 20) is in an interlocking configuration with an electrical bus of an adjacent electrocaloric element in the stack.

2. The heat transfer system of claim 1, wherein the first electrical bus element (18) is electrically connected to at least one other electrical bus of another electrocaloric element in the stack at the same polarity as said first electrical bus (18), and the second electrical bus element (20) is electrically connected to at least one other electrical bus of another electrocaloric element in the stack at the same polarity as said second electrical bus (20).

3. The heat transfer system of claim 1, wherein the first or second electrical bus (18, 20) is electrically connected to an electrical bus of an adjacent electrocaloric element in the stack at the same polarity as said first or second electrical bus.

4. The heat transfer system of claims 1 or 2, wherein the first and second electrical bus elements (18, 20) are each electrically connected to electrical bus elements of an adjacent electrocaloric element in the stack at the same polarities as said first and second electrical bus elements, respectively.

5. The heat transfer system of claim 1, wherein the first and second electrical bus elements (18, 20) are each in an interlocking configuration to electrical bus elements of an adjacent electrocaloric element in the stack.

6. The heat transfer system of any of claims 1-5, wherein the first electrical bus element (18) is electrically connected to a live electrode and the second electrical bus element (20) is electrically connected to a ground electrode.

7. The heat transfer system of any of claims 1-6, wherein the first and second electrical bus elements (18, 20) are disposed along opposite edges of the electrocaloric element.

8. The heat transfer system of claim 7, wherein the first electrode (14) extends from the first electrical bus element (18) along the first side of the electrocaloric film (12) to a position physically separated from the second electrical bus element (20), and the second electrode (16) extends from the second electrical bus element (20) along the second side of the electrocaloric film (12) to a position physically separated from the first electrical bus element (18).

9. The heat transfer system of any of claims 1-6, wherein the first and second electrical bus elements (18, 20) are disposed along a common edge of the electrocaloric element.

10. The heat transfer system of any of claims 1-9, comprising at least two adjacent electrocaloric elements that share an electrode at least partially embedded between the electrocaloric films (12) of the adjacent electrocaloric elements.

11. The heat transfer system of claim 10, wherein the embedded electrode is a live electrode, and comprising ground electrodes adjacent to the fluid flow path (25).

12. The heat transfer system of any of claims 1-11, wherein the electrocaloric film (12) comprises an electrocaloric polymer, preferably polyvinylidene fluoride (PVDF) or a liquid crystal polymer (LCP).

13. The heat transfer system of any of claims 1-12, further comprising
a first thermal flow path (318) between the fluid flow path and a heat sink (317)
a second thermal flow path (322) between the fluid flow path and a heat source (320); and
a controller (324) configured to control electrical current to the electrodes and to selectively direct transfer of heat energy from the fluid flow path in thermal communication with electrocaloric element to the heat sink (317) along the first thermal flow path (328) or from the heat source (320) to the fluid flow path in thermal communication with the electrocaloric element along the second thermal flow path (322).

14. A method of fabricating the heat transfer system of any of claims 1-13, comprising assembling repeating units of said modules (10) in a stack configuration.

## Patentansprüche

1. Wärmeübertragungssystem, umfassend eine Vielzahl von Modulen (10), die in einem Stapel eingerichtet sind, wobei jedes der Module Folgendes umfasst
ein elektrokalorisches Element, das einen elektrokalorischen Film (12), eine erste Elektrode (14) an einer ersten Seite des elektrokalorischen Films (12) und eine zweite Elektrode (16) an einer zweiten Seite des elektrokalorischen Films (12) umfasst;
einen Fluidflusspfad (25) zwischen zwei oder mehr elektrokalorischen Elementen;
ein erstes elektrisches Sammelschienenelement (18) in elektrischem Kontakt mit der ersten Elektrode (14); und
ein zweites elektrisches Sammelschienenelement (20) in elektrischem Kontakt mit der zweiten Elektrode (16);
wobei das erste elektrische Sammelschienenelement (18) elektrisch mit mindestens einer anderen elektrischen Sammelschiene eines anderen elektrokalorischen Elements in dem Stapel bei derselben Polarität wie die erste elektrische Sammelschiene (18) verbunden ist oder das zweite elektrische Sammelschienenelement (20) elektrisch mit mindestens einer anderen elektrischen Sammelschiene eines anderen elektrokalorischen Elements in dem Stapel bei derselben Polarität wie die zweite elektrische Sammelschiene (20) verbunden ist;
**dadurch gekennzeichnet, dass** das erste oder zweite elektrische Sammelschienenelement (18, 20) in einer Eingriffskonfiguration mit einer elektrischen Sammelschiene eines angrenzenden elektrokalorischen Elements in dem Stapel ist.

2. Wärmeübertragungssystem nach Anspruch 1, wobei das erste elektrische Sammelschienenelement (18) elektrisch mit mindestens einer anderen elektrischen Sammelschiene eines anderen elektrokalorischen Elements in dem Stapel bei derselben Polarität wie die erste elektrische Sammelschiene (18) verbunden ist und das zweite elektrische Sammelschienenelement (20) elektrisch mit mindestens einer anderen elektrischen Sammelschiene eines anderen elektrokalorischen Elements in dem Stapel bei derselben Polarität wie die zweite elektrische Sammelschiene (20) verbunden ist.

3. Wärmeübertragungssystem nach Anspruch 1, wobei die erste oder zweite elektrische Sammelschiene (18, 20) elektrisch mit einer elektrischen Sammelschiene eines angrenzenden elektrokalorischen Elements in dem Stapel bei derselben Polarität wie die erste oder zweite elektrische Sammelschiene verbunden ist.

4. Wärmeübertragungssystem nach Anspruch 1 oder 2, wobei das erste und das zweite elektrische Sammelschienenelement (18, 20) jeweils elektrisch mit elektrischen Sammelschienenelementen eines angrenzenden elektrokalorischen Elements in dem Stapel bei derselben Polarität wie das erste beziehungsweise das zweite elektrische Sammelschienenelement verbunden sind.

5. Wärmeübertragungssystem nach Anspruch 1, wobei das erste und das zweite elektrische Sammelschienenelement (18, 20) jeweils in einer Eingriffskonfiguration mit elektrischen Sammelschienenelementen eines angrenzenden elektrokalorischen Elements in dem Stapel sind.

6. Wärmeübertragungssystem nach einem der Ansprüche 1-5, wobei das erste elektrische Sammelschienenelement (18) elektrisch mit einer Leiterelektrode verbunden ist und das zweite elektrische Sammelschienenelement (20) elektrisch mit einer Masseelektrode verbunden ist.

7. Wärmeübertragungssystem nach einem der Ansprüche 1-6, wobei das erste und das zweite elektrische Sammelschienenelement (18, 20) entlang gegenüberliegender Kanten des elektrokalorischen Elements angeordnet sind.

8. Wärmeübertragungssystem nach Anspruch 7, wobei sich die erste Elektrode (14) von dem ersten elektrischen Sammelschienenelement (18) entlang der ersten Seite des elektrokalorischen Films (12) zu einer Position erstreckt, die physisch von dem zweiten elektrischen Sammelschienenelement (20) getrennt ist, und sich die zweite Elektrode (16) von dem zweiten elektrischen Sammelschienenelement (20) entlang der zweiten Seite des elektrokalorischen Films (12) zu einer Position erstreckt, die physisch von dem ersten elektrischen Sammelschienenelement (18) getrennt ist.

9. Wärmeübertragungssystem nach einem der Ansprüche 1-6, wobei das erste und das zweite elektrische Sammelschienenelement (18, 20) entlang einer gemeinsamen Kante des elektrokalorischen Elements angeordnet sind.

10. Wärmeübertragungssystem nach einem der Ansprüche 1-9, umfassend mindestens zwei angrenzende elektrokalorische Elemente, die sich eine Elektrode teilen, die mindestens teilweise zwischen den elektrokalorischen Filmen (12) der angrenzenden elektrokalorischen Elemente eingebettet ist.

11. Wärmeübertragungssystem nach Anspruch 10, wobei die eingebettete Elektrode eine Leiterelektrode ist, und das Masseelektroden angrenzend an den Fluidflusspfad (25) umfasst.

12. Wärmeübertragungssystem nach einem der Ansprüche 1-11, wobei der elektrokalorische Film (12) ein elektrokalorisches Polymer umfasst, bevorzugt Polyvinylidenfluorid (PVDF) oder ein Flüssigkristallpolymer (LCP).

13. Wärmeübertragungssystem nach einem der Ansprüche 1-12, weiter umfassend
einen ersten Wärmeflusspfad (318) zwischen dem Fluidflusspfad und einem Kühlkörper (317)
einen zweiten Wärmeflusspfad (322) zwischen dem Fluidflusspfad und einer Wärmequelle (320); und
eine Steuerung (324), die konfiguriert ist, elektrischen Strom zu den Elektroden zu steuern und selektiv Übertragung von Wärmeenergie von dem Fluidflusspfad in Wärmekommunikation mit einem elektrokalorischen Element entlang des ersten Wärmeflusspfads (328) zu dem Kühlkörper (317) oder entlang des zweiten Wärmeflusspfads (322) von der Wärmequelle (320) zu dem Fluidflusspfad in Wärmekommunikation mit dem elektrokalorischen Element zu lenken.

14. Verfahren zum Herstellen des Wärmeübertragungssystems nach einem der Ansprüche 1-13, umfassend Zusammenbauen sich wiederholender Einheiten der Module (10) in einer Stapelkonfiguration.

## Revendications

1. Système de transfert de chaleur, comprenant une pluralité de modules (10) agencés en une pile, chacun des modules comprenant
un élément électrocalorique comprenant un film électrocalorique (12), une première électrode (14) sur un premier côté du film électrocalorique (12), et une seconde électrode (16) sur un second côté du film électrocalorique (12) ;
un trajet d'écoulement de fluide (25) entre deux éléments électrocaloriques ou plus;
un premier élément de bus électrique (18) en contact électrique avec la première électrode (14) ; et
un second élément de bus électrique (20) en contact électrique avec la seconde électrode (16) ;
dans lequel le premier élément de bus électrique (18) est connecté électriquement à au moins un autre bus électrique d'un autre élément électrocalorique dans la pile à la même polarité que ledit premier bus électrique (18), ou le second élément de bus électrique (20) est connecté électriquement à au moins un autre bus électrique d'un autre élément électrocalorique dans la pile à la même polarité que ledit second bus électrique (20) ;
**caractérisé en ce que**
le premier ou le second élément de bus électrique (18, 20) est dans une configuration de verrouillage mutuel avec un bus électrique d'un élément électrocalorique adjacent dans la pile.

2. Système de transfert de chaleur selon la revendication 1, dans lequel le premier élément de bus électrique (18) est connecté électriquement à au moins un autre bus électrique d'un autre élément électrocalorique dans la pile à la même polarité que ledit premier bus électrique (18), et le second élément de bus électrique (20) est connecté électriquement à au moins un autre bus électrique d'un autre élément électrocalorique dans la pile à la même polarité que ledit second bus électrique (20).

3. Système de transfert de chaleur selon la revendication 1, dans lequel le premier ou second bus électrique (18, 20) est connecté électriquement à un bus électrique d'un élément électrocalorique adjacent dans la pile à la même polarité que ledit premier ou second bus électrique.

4. Système de transfert de chaleur selon la revendication 1 ou 2, dans lequel les premier et second éléments de bus électrique (18, 20) sont connectés chacun électriquement à des éléments de bus électrique d'un élément électrocalorique adjacent dans la pile aux mêmes polarités que lesdits premier et second éléments de bus électrique, respectivement.

5. Système de transfert de chaleur selon la revendication 1, dans lequel les premier et second éléments de bus électrique (18, 20) sont chacun dans une configuration de verrouillage mutuel avec des éléments de bus électrique d'un élément électrocalorique adjacent dans la pile.

6. Système de transfert de chaleur selon l'une quelconque des revendications 1-5, dans lequel le premier élément de bus électrique (18) est connecté électriquement à une électrode sous tension et le second élément de bus électrique (20) est connecté électriquement à une électrode de masse.

7. Système de transfert de chaleur selon l'une quelconque des revendications 1-6, dans lequel les premier et second éléments de bus électrique (18, 20) sont disposés le long de bords opposés de l'élément électrocalorique.

8. Système de transfert de chaleur selon la revendication 7, dans lequel la première électrode (14) s'étend à partir du premier élément de bus électrique (18) le long du premier côté du film électrocalorique (12) vers une position séparée physiquement du second élément de bus électrique (20), et la seconde électrode (16) s'étend à partir du second élément de bus électrique (20) le long du second côté du film électrocalorique (12) vers une position séparée physiquement du premier élément de bus électrique (18).

9. Système de transfert de chaleur selon l'une quelconque des revendications 1-6, dans lequel les premier et second éléments de bus électrique (18, 20) sont disposés le long d'un bord commun de l'élément électrocalorique.

10. Système de transfert de chaleur selon l'une quelconque des revendications 1-9, comprenant au moins deux éléments électrocaloriques adjacents qui partagent une électrode au moins partiellement intégrée entre les films électrocaloriques (12) des éléments électrocaloriques adjacents.

11. Système de transfert de chaleur selon la revendication 10, dans lequel l'électrode intégrée est une électrode sous tension, et comprenant des électrodes de masse adjacentes au trajet d'écoulement de fluide (25).

12. Système de transfert de chaleur selon l'une quelconque des revendications 1 à 11, dans lequel le film électrocalorique (12) comprend un polymère électrocalorique, de préférence du fluorure de polyvinylidène (PVDF) ou un polymère à cristaux liquides (LCP).

13. Système de transfert de chaleur système de selon l'une quelconque des revendications 1-12, comprenant en outre :
un premier trajet d'écoulement thermique (318) entre le trajet d'écoulement de fluide et un dissipateur de chaleur (317),
un second trajet d'écoulement thermique (322) entre le trajet d'écoulement de fluide et une source de chaleur (320) ; et
un dispositif de commande (324) configuré pour commander un courant électrique vers les électrodes et pour diriger sélectivement un transfert d'énergie thermique depuis le trajet d'écoulement de fluide en communication thermique avec un élément électrocalorique vers le dissipateur de chaleur (317) le long du premier trajet d'écoulement thermique (328) ou depuis la source de chaleur (320) vers le trajet d'écoulement de fluide en communication thermique avec l'élément électrocalorique le long du second trajet d'écoulement thermique (322).

14. Procédé de fabrication du système de transfert de chaleur selon l'une quelconque des revendications 1-13, comprenant un assemblage d'unités de répétition desdits modules (10) dans une configuration de pile.
